# EUROPEAN PATENT APPLICATION

(11) **EP 1 157 896 A2**
(43) Date of publication of application: **28.11.2001**
(21) Application number: 01850096.7
(22) Date of filing: 23.05.2001
(51) Int. Cl.: B60R 16/02

(54) **Battery disconnector**

(30) Priority: 23.05.2000 SE 0001923
(71) Applicant: Berifors AB, 168 66 Bromma (SE)
(72) Inventor: Jakobsson, Anders, 17263 Sundbyberg (SE); Nicolous, Ralf, 73828 Esslingen (DE); Johansson, Liselotte, 11460 Stockholm (SE)
(74) Representative: Karlström, Lennart

(57) **Abstract**

The present invention relates to a battery cut-out for an automotive vehicle, comprising a disconnecting element (23) for disconnecting the current supply from a battery (21). The battery cut-out also includes an intelligent control unit (28) which is connected to other vehicle units (25,32).

## Description

The present invention relates to a battery cut-out of the kind used in automotive vehicles.

It is necessary to equip automotive vehicles that transport hazardous or dangerous goods with a battery cut-out that is able to disconnect the supply of current in the vehicle in the event of, for example, an accident or when loading and offloading dangerous goods. These battery cut-outs are manoeuvred manually and are normally actuated with the aid of one or more switches or emergency stops provided in or on the vehicle concerned. When it is required by law that a tachograph or time-mileage recorder must always be kept in operation, the recorder is not coupled via the battery cut-out, but is connected directly to the battery, although via a current limiter.

One drawback with this type of battery cut-out is that when activated it implacably cuts off all current supply to all vehicle functions, with the exception of the aforesaid time-mileage recorder. In principle, everything in the vehicle ceases to function, when the supply of current is cut-out. The problems that can occur when the supply of current ceases as the vehicle is moving will readily be realised, primarily when the vehicle is moving at high speed and servo devices stop functioning completely or the vehicle lights are extinguished as the vehicle travels in the dark.

It is therefore an object of the present invention to provide a novel, more intelligent, battery cut-out that is also able to take prevailing conditions into consideration, so that the aforesaid problems need not occur.

The object of the invention is achieved with an inventive battery cut-out that is provided with an intelligent control unit which is connected to other units in the vehicle.

It is also an object of the present invention to provide a battery cut-out with which faults in the function of the battery cut-out can be detected in time, so as to avoid unnecessary breaking of the current.

This object of the invention is achieved with an inventive battery cut-out in which the intelligent control unit includes a facility for diagnosis of its own function and also of the function of the cut-out.

A further object of the invention is to provide a battery cut-out with which possible driving conditions are taken into consideration before breaking-off the current supply.

This object of the invention is achieved with an inventive battery cut-out with which the intelligent control unit is adapted to enable the supply of current to be disconnected when pre-determined conditions which indicate safe disconnection of the current supply are fulfilled.

A further object of the invention is to provide a novel, more intelligent, battery cut-out that can also be actuated automatically in the event of an accident, should the driver of the vehicle, for instance, be unable to activate the battery cut-out himself.

This further object of the invention is achieved in that the intelligent relay control unit is adapted to activate the battery cut-out automatically when pre-determined conditions for such automatic activation are fulfilled.

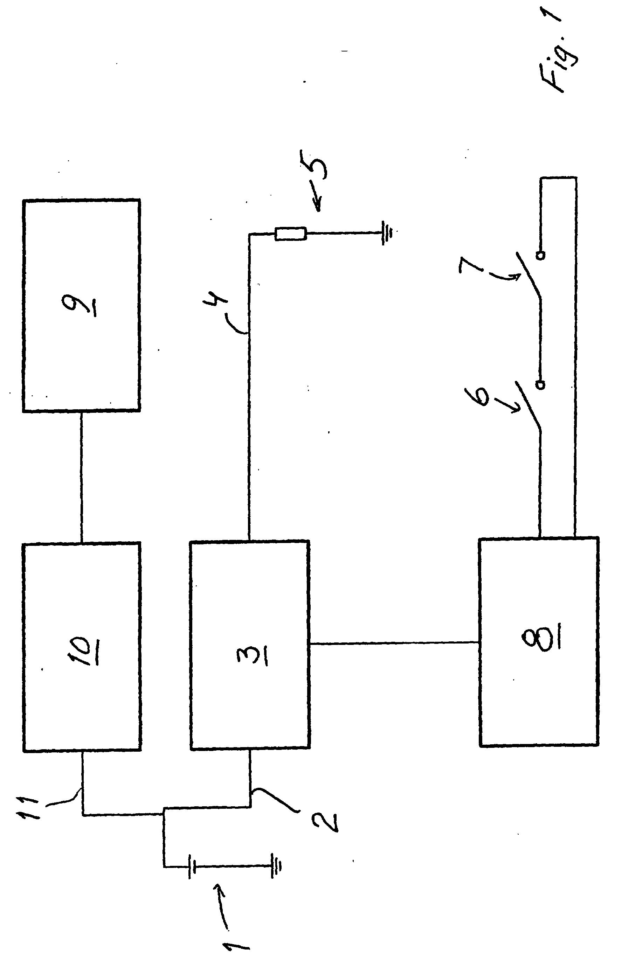

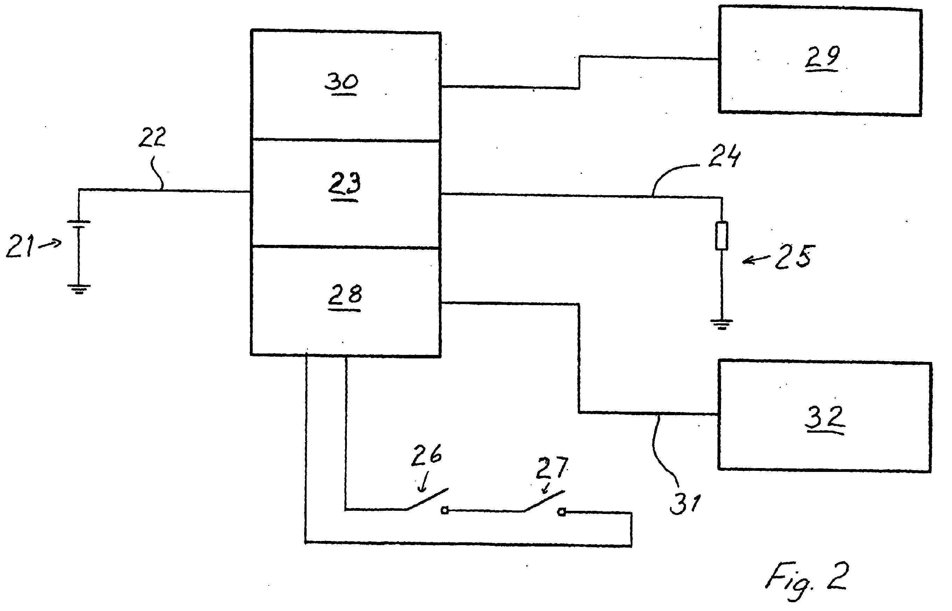

The invention will now be described in more detail with reference to a non-limiting, exemplifying embodiment and also with reference to the accompanying drawings, in which **Figure** **1** is a diagram illustrating the construction of a battery cut-out of known kind, and **Figure 2** is a corresponding view of a battery cut-out constructed in accordance with the invention.

Figure 1 illustrates principally a battery cut-out constructed in accordance with known technology. A battery cable 2 extends from a battery 1 to a relay 3, from which the great majority of consumers 5 are supplied with current via a main feeder cable 4. It will be understood that the consumers may comprise a large number of different units of different kinds, and that the main cable, or feeder, may comprise several different cables and/or include branches. Activation of the battery cut-out is effected, for instance, through the medium of two emergency buttons 6 and 7, which are connected to a relay control unit 8 which, in turn, controls the relay 3, so as to be able to isolate the cable 4 from the battery 1.

In view of the fact that a tachograph or time-mileage recorder 9 must always be supplied with current, the recorder in the illustrated known system is connected directly to the battery 1 through the medium of a voltage and current limiter 10 and a separate battery cable 11.

Figure 2 is a corresponding schematic illustration of the novel battery cut-out constructed in accordance with the invention. As shown in Figure 2, a battery cable 22 extends from a battery 21 to a disconnecting element 23. All current consumers 25 are connected to the disconnecting element via separate, or branched, feeder cables 24. The disconnecting element 23 is designed to allow current to pass through the feeder cable 24 selectively to respective current consumers 25, with the exception of the recorder 29 - which must always be powered. The disconnecting element 23 is controlled by an intelligent control unit 28 to which two emergency stops 26 and 27 are connected, for manual activation of the battery cut-out. These emergency stops 26, 27 are suitably mounted inside the driver's cabin or on the outside of the vehicle.

The disconnecting element may, for instance, be a simple, conventional relay as in earlier systems, although it may, alternatively, be a semi-conductor element that has corresponding properties.

The emergency stops may, for instance, have the form of emergency buttons, although other means may be provided for activation of the battery cut-out 23.

The time-mileage recorder 29 is connected to the disconnecting element 23, which includes a separate voltage and current limiter 30 and which, as before mentioned, is always connected to the battery 21 via the battery cable 22 so as to ensure that current supply to the voltage and current limiter 30 is never discontinued.

Other electronic units 32 in the vehicle are also connected to the intelligent control unit 28, via communication links 31. These other electronic units may, for instance, be sensors operating in conjunction with speedometers, engine electronics, fire detectors, airbag sensors, etc. Many of these electronic units 32 are also current consumers 25.

When one of the emergency stops 26, 27 is actuated, the intelligent control unit 28 functions to determine which current consumer 25 is active and enables the supply of current to the current consumers to be discontinued when certain preset conditions are fulfilled. These conditions are primarily set to prevent safety of the vehicle being endangered during a journey.

In a further development of the invention, the intelligent control unit may also be designed so as to prevent, for example, the supply of current to the engine control from being discontinued when the vehicle is in motion, possibly travelling above a certain speed, said intelligent control unit 28 being supplied with information to this effect via the communication link 31 from the speedometer sensor, the electronic unit 32.

Naturally, discontinuation of the current supply whilst the vehicle is in motion could be disastrous, since the driver would not then be able to manoeuvre the vehicle, since servo assisted functions may possibly cease to function, among other things. According to the invention, the intelligent control unit 28 may have the form of a computer, therewith enabling the computer software to include parameters relating to conditions that shall be fulfilled in order to allow discontinuation of the current supply. These conditions may be different for different current consumers, so that current consuming functions, for instance, that do not influence manoeuvring of the vehicle can be isolated immediately. With respect to other functions, these functions may conveniently be disengaged selectively as soon as the conditions for their disconnection are fulfilled.

The intelligent control unit 28 may also be adapted to disconnect all or selectively chosen current consumers 25 upon receipt of certain signals from the electronic unit 32 via the communication links 31, without activation of any one of the emergency stops 26, 27. This can apply, for instance, when the intelligent control unit 28 receives an indication from the airbag release sensor that the vehicle airbags have been released due to an accident. It may be such that in such an event the driver may be unable to activate any of the emergency stops 26, 27 manually, wherewith it may be of value if the intelligent control unit 28 by total disconnection of the current supply in the vehicle is able to prevent a still worse accident.

Similarly, the intelligent control unit 28 is able to receive signals from fire detectors in the vehicle engine space indicating the probable occurrence of a fire, and then disconnect the current supply to those units that are not absolutely required, in addition to warning the driver of course.

The intelligent control unit 28 may also be connected with a so-called immobiliser function. This enables the anti-theft protection of the vehicle to be improved, since the intelligent control unit 28 can be caused to function as a part of the vehicle anti theft system and essential current supply functions can be disconnected unless proper authority can be verified in some way. This authority can be verified, for instance, by inserting a code, an electronic key or technically equivalent means. In this respect, the intelligent control unit 28 can be designed to constantly keep the essential current supplies in the vehicle disconnected in the absence of proper authorisation. This would render it impossible to start and drive the vehicle without the proper authority to overcome the immobilising function.

The intelligent control unit 28 may also include an own diagnostic function that checks that the control unit functions as intended. This is then a part of the function found in the intelligent control unit. In the event of faults being discovered, these faults can be indicated to the driver, for instance through the medium of a warning lamp that shows a fault in the battery cut-out.

The disconnecting element 23, the intelligent control unit 28 and the voltage and current limiter 30 for the time-mileage recorder are suitably interconnected in a unit that is mounted in a closed casing. This closed casing will, of course, be constructed to withstand the loads to which it may be subjected without the units contained therein being damaged or otherwise affected.

## Claims

1. A battery cut-out for an automotive vehicle, comprising a disconnecting element (23) for breaking the supply of current from a battery (21), **characterised in that** the battery cut-out includes an intelligent control unit (28) in connection with other vehicle units (25,32).

2. A battery cut-out according to Claim 1, **characterised in that** the intelligent control unit (28) includes an own diagnostic function and a disconnecting element diagnostic function.

3. A battery cut-out according to Claim 1 or 2, **characterised in that** the intelligent control unit (28) is connected to other electronic units (32) in the vehicle via communication links (31), such as to achieve data-determinative disconnection of the current supply.

4. A battery cut-out according to any one of the preceding claims, **characterised in that** the intelligent control unit (28) is adapted to enable the current supply to other vehicle units (25,32) to be disconnected when pre-determined conditions for non-hazardous disconnection of said supply are fulfilled.

5. A battery cut-out according to any one of the preceding claims, **characterised by** emergency stops (26,27) for activation of the disconnecting element (23) of said battery cut-out, wherewith the current supply is only disconnected when the intelligent control unit (28) so allows.

6. A battery cut-out according to any one of the preceding claims, **characterised in that** the intelligent control unit (28) functions to activate the disconnecting element (23) of said battery cut-out automatically when set conditions for such automatic activation are fulfilled.

7. A battery cut-out according to any one of the preceding claims, **characterised in that** the intelligent control unit (28) is connected to a so-called immobiliser in order to also function as an electronic lock.

8. A battery cut-out according to any one of the preceding claims, **characterised in that** the intelligent control unit (28) includes software for determining when disconnection of the current supply can be permitted.

9. A battery cut-out according to any one of the preceding claims, **characterised in that** the disconnecting element (23) and the intelligent control unit (28) are interconnected to form a single unit.

10. A battery cut-out according to any one of the preceding claims, **characterised in that** the vehicle time-mileage recorder (29) is connected via the intelligent control unit (28), said control unit being adapted to ensure that the time-mileage recorder (29) will always be supplied with current.
